(19) Europäisches Patentamt
European Patent Office
Office européen des brevets

(11) **EP 2 397 882 B1**

(12) **FASCICULE DE BREVET EUROPEEN**

(45) Date de publication et mention
de la délivrance du brevet:
**05.12.2012 Bulletin 2012/49**

(51) Int Cl.:
***G02B 26/10*** *(2006.01)*

(21) Numéro de dépôt: **11170277.5**

(22) Date de dépôt: **17.06.2011**

(54) **Dispositif de balayage rapide double étage pour système d'observation à distance**

Vorrichtung mit zweistufiger Schnellabtastung für Fernbeobachtungssystem

Two-level high-speed scanning device for distant observation system

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.06.2010 FR 1054870**

(43) Date de publication de la demande:
**21.12.2011 Bulletin 2011/51**

(73) Titulaire: **Astrium SAS**
**75016 Paris (FR)**

(72) Inventeur: **Vaillon, Ludovic**
**31400 Toulouse (FR)**

(74) Mandataire: **Fourcade, Emmanuelle**
**SCHMIT CHRETIEN**
**Parc de Basso Cambo**
**4, Rue Paul Mesplé**
**31100 Toulouse (FR)**

(56) Documents cités:
**JP-A- 7 307 703          US-A- 5 307 198**
**US-A1- 2002 092 963     US-A1- 2002 141 689**

## Description

La présente invention relève du domaine de l'instrumentation optique. Elle concerne plus précisément les instruments d'observation à distance, et en particulier les mécanismes de pointage et de balayage de ces instruments.

## Contexte de l'invention et problèmes posés

Un système d'observation à distance comporte usuellement un instrument d'observation, lequel est pointé selon une ligne de visée optique vers la surface d'un corps à observer, par exemple la surface d'une planète. On définit ici la **ligne de visée** comme la partie sortante du chemin optique de l'instrument d'observation, qui détermine ainsi un point central d'observation sur la surface en cours d'observation.

Un problème fréquent de ces systèmes d'observation à distance est de devoir couvrir sur la surface observée, du fait de leur cahier des charges d'observation, une **zone angulaire** plus importante que le **champ de vue** (ouverture angulaire de vue de l'instrument) de l'instrument réalisant l'observation.

Ce problème trouve usuellement une solution par l'implémentation d'un balayage de la zone à observer par la ligne de visée de l'instrument d'observation, réalisée au moyen par exemple d'un miroir mobile monté sur un mécanisme de pointage. On comprend que le miroir mobile permet de modifier simplement la ligne de visée, sans avoir à réorienter l'instrument d'observation proprement dit.

Le balayage, défini comme un déplacement commandé généralement répétitif de la ligne de visée, permettant de faire parcourir toute la surface observée au champ de vue de l'instrument optique, peut éventuellement être de type continu, ce qui entraîne l'inconvénient de résulter en l'acquisition par l'instrument d'observation d'une scène défilante. Par analogie et de façon simplifiée, cela revient à dire que l'on acquiert une séquence vidéo balayant la surface observée, plutôt qu'une série de photos instantanées. **Le temps d'intégration** est déterminé par le pas pixel et la vitesse de balayage, ce qui peut être contraignant.

De ce fait, on préfère parfois utiliser un balayage commandé selon un profil "en marche d'escalier", comportant une répétition de séquences comprenant une phase de déplacement de la ligne de visée puis une phase de pointage fixe pour l'acquisition d'une scène sur la zone à observer.

La difficulté classique d'un d'instrument utilisant ce type de balayage en marche d'escalier, et connu de l'homme du métier sous le vocable anglophone de "step and stare" (c'est-à-dire selon une traduction approximative "mouvement élémentaire puis observation") est de requérir simultanément des manoeuvres rapides (pour maximiser le temps utile d'imagerie) et une très bonne stabilité de pointage lors des prises de vue.

Un mécanisme de pointage avec une **bande passante** élevée (grande rapidité et très bonne précision de pointage) est nécessaire pour assurer une stabilisation rapide du pointage, après la réorientation de la ligne de visée, ce qui est très contraignant pour le mécanisme en créant des exigences multiples.

Le dispositif nécessite un actionneur rapide et à forte capacité de couple, pour un déplacement angulaire rapide, et un arrêt également rapide dans une nouvelle position angulaire, de certains éléments optique déterminant la ligne de visée, ce qui est en général contradictoire avec la grande stabilité nécessaire en prise de vue.

Il requiert par ailleurs une articulation très rigide, de manière à ce que ses premiers modes souples (c'est-à-dire ses premières fréquences de résonance) apparaissent à des fréquences élevées, pour qu'ils ne soient pas excités par la manoeuvre et/ou qu'ils n'affectent pas la stabilité de l'asservissement.

En pratique, les mécanismes "step and stare" existants combinent un contrôle de pointage en boucle fermée à grande bande passante avec une commande en boucle ouverte du profil de balayage (usuellement connu de l'homme du métier sous le nom de "feedforward") pour réduire l'amplitude du transitoire de pointage (vibrations dues à l'arrêt soudain de la ligne de visée dans sa nouvelle position de prise de vue) après chaque manoeuvre, faute de quoi une bande passante encore plus élevée est requise pour conserver une même durée de transitoire.

Cela nécessite une bonne connaissance du mécanisme de balayage (inertie mobile, raideur ou frottement de l'articulation, gain de l'électronique de commande du moteur).

La performance du système de balayage devient ainsi fortement dépendante de paramètres qui doivent donc être caractérisés finement lors de la conception et **l'intégration** de l'instrument d'observation, et qui doivent être stables durant sa durée de vie.

Pour un **diamètre de pupille** (c'est-à-dire le diamètre du faisceau lumineux collecté par l'instrument) donné, qui fixe la taille du miroir mobile, ces différentes contraintes limitent la rapidité du balayage et donc la fréquence de couverture de la zone d'observation, qui est souvent un paramètre clé (en particulier pour les missions de détection et de suivi d'événements).

Le document US-A-5 307 198 divulgue un dispositif de balayage comprenant des moyens de déflection qui sont rétro commandés.

## Objectifs de l'invention

L'objectif de la présente invention est alors de proposer une architecture de balayage de la ligne de visée d'un instrument d'observation à distance de type "step & stare", permettant de relâcher fortement les exigences sur le mécanisme de balayage, ou pour un mécanisme existant, d'améliorer sensiblement la rapidité de balayage et la stabilité de prise de vue.

Exposé de l'invention

L'invention vise à cet effet un dispositif de balayage pour système d'observation à distance, ledit système comportant un instrument d'observation présentant un champ de vue prédéterminé, ledit instrument d'observation comportant un chemin optique adapté à être orienté selon une ligne de visée optique (LdV) vers une zone angulaire d'un corps à observer, ladite zone à observer étant plus importante que le champ de vue de l'instrument d'observation,

le dispositif comportant des premiers moyens de balayage de la zone à observer par le champ de vue de l'instrument d'observation, lesdits premiers moyens de balayage comportant des premiers moyens de déflexion angulaire de la ligne de visée optique, et des moyens de commander ces premiers moyens de déflexion angulaire suivant une fonction prédéterminée d'un profil de balayage souhaité $\Theta s$,

lesdits premiers moyens de balayage comportant :

- des moyens de détection de l'angle de balayage intermédiaire $\Theta_1$ réalisé par les premiers moyens de déflexion angulaire,
- des moyens de comparaison pour former un signal d'erreur de pointage $err_p$ comparant l'angle de balayage intermédiaire mesuré $\Theta_1 + err_{codeur}$ fourni par les moyens de détection, au profil de balayage souhaité $\Theta s$,
- des moyens de réinjection de la sortie des moyens de comparaison dans des moyens comprenant des lois de contrôle (24) des premiers moyens de balayage (40), afin d'asservir la ligne de visée optique sur le profil de balayage souhaité $\Theta s$, le dispositif de balayage comportant en outre :
- des seconds moyens de balayage, comprenant des moyens de pointage fin permettant d'orienter des seconds moyens de déflexion angulaire, placés en série, sur le chemin optique de l'instrument d'observation, avec les premiers moyens de déflexion angulaire, ces moyens de pointage fin recevant une commande en boucle ouverte de compensation de l'erreur de pointage $err_p$.

Selon une mise en oeuvre préférée, le profil de balayage $\Theta s$ est de type "step and stare".
Selon une mise en oeuvre avantageuse, les moyens de détection de l'angle de balayage intermédiaire $\Theta_1$ comportent un capteur angulaire d'une précision supérieure ou égale à la précision de pointage de ligne de visée optique recherchée et atteignable par les seconds moyens de déflexion angulaire.
Selon une mise en oeuvre avantageuse, les premiers moyens de déflexion angulaire sont constitués d'un miroir d'entrée mobile angulairement, guidé en rotation par un mécanisme grand angle, le mécanisme de pointage fin utilisant comme référence de pointage un signal d'erreur de pointage $err_p$, par comparaison de la mesure $\Theta_1 + err_{codeur}$ du capteur angulaire du miroir d'entrée audit profil de balayage souhaité $\Theta s$.
Dans ce cas, plus particulièrement, le mécanisme de pointage fin est du type comportant un asservissement interne, qui réalise la consigne angulaire demandée $\Theta_c$ en la comparant à une mesure interne de déflexion.
Selon une mise en oeuvre avantageuse, le mécanisme de pointage fin a une gamme angulaire compatible avec l'amplitude des erreurs de pointage du mécanisme grand angle.
Selon une mise en oeuvre avantageuse, le mécanisme de pointage fin est un mécanisme de pointage selon deux axes comportant un miroir de renvoi et permettant la stabilisation haute fréquence du faisceau optique sur une gamme angulaire de l'ordre de +/- 5 milliradians.
Selon une mise en oeuvre avantageuse, la fonction prédéterminée du profil de balayage souhaité $\Theta s$, est un profil spécifique "lissant" les marches d'escalier du profil de balayage souhaité $\Theta s$.
Dans ce cas, selon un mode de réalisation avantageux, le profil commandé à l'étage grand angle est un balayage à vitesse constante correspondant à la moyenne du profil de balayage en marches d'escalier nécessaire à la prise d'images.
Alternativement, le profil commandé à l'étage grand angle est un balayage rampe + sinus approchant au mieux le profil de balayage en marches d'escalier.
On comprend que la caractéristique principale de l'invention est l'architecture bi-étage obtenue par l'introduction d'un second mécanisme, dit de pointage fin, en série d'un étage mécanisme de balayage dit "grand angle" par opposition au mécanisme de pointage fin qui a un débattement angulaire faible.
Ce mécanisme de pointage fin est en charge de compenser les erreurs de réalisation du profil de balayage par le mécanisme de balayage grand angle. Il est commandé en boucle ouverte sur le signal d'erreur formé en comparant le profil de balayage à réaliser avec la mesure du senseur angulaire du mécanisme de balayage "grand angle".
Le mécanisme de pointage fin corrige donc en boucle ouverte l'erreur de réalisation du profil par le mécanisme "grand angle".
L'invention va à l'encontre d'un préjugé de l'homme du métier qui fait que celui-ci préfère de façon usuelle des systèmes en boucle fermé pour les applications de pointage à haute précision telles que celle-ci.
Au contraire, la présente invention utilise une commande en boucle ouverte du mécanisme de pointage fin et on détermine que ceci permet ici d'améliorer la performance finale.

Selon diverses dispositions avantageuses, éventuellement mises en oeuvre conjointement :

- les premiers moyens de déflexion angulaire sont constitués d'un miroir d'entrée mobile angulairement, commandés par un mécanisme grand angle qui comporte un guidage en rotation du miroir d'entrée par pivots flexibles.
- le mécanisme grand angle est mû par un moteur couple à courant continu sans balais, à débattement limité.
- le capteur angulaire est un codeur angulaire présentant une précision de l'ordre de 22 bits (1.5 microradian) et une cadence de mesure de l'ordre de 5 KHz.
- le dispositif comporte des moyens de réinjecter la différence $err_p$ entre le profil de balayage souhaité $\Theta s$ et l'information de sortie du codeur angulaire, dans des lois de contrôle du mécanisme grand angle.

Dans ce cas, plus précisément, il comporte des moyens de combiner d'une part le signal de sortie d'une électronique de commande appliquant ces lois de contrôle au signal d'erreur de position $err_p$, et d'autre part le profil de balayage souhaité $\Theta s$ pour piloter le mécanisme grand angle.

Selon une mise en oeuvre avantageuse, le dispositif comporte des moyens de commander, selon une logique en boucle ouverte "feedforward", le couple appliqué au miroir d'entrée et correspondant au profil de balayage souhaité $\Theta s$.

Selon un cas particulier de mise en oeuvre, la commande en boucle ouverte "feedforward" est générée notamment sur la base des valeurs estimées du gain de l'électronique de commande, de l'inertie mobile et de la raideur des pivots flexibles du mécanisme grand angle.

Selon une mise en oeuvre avantageuse, la bande passante à -3 dB en boucle fermée des premiers moyens de balayage est réglée à une fréquence permettant d'obtenir un temps de convergence compatible avec le temps de manoeuvre du miroir d'entrée.

Plus particulièrement dans ce cas, les premiers moyens de balayage comportent un filtre passe-bas de Cauer du 3ème ordre, dont la fréquence de coupure est calée légèrement en dessous de la fréquence attendue du premier mode souple.

L'invention vise sous un second aspect un instrument d'observation, comportant un dispositif tel qu'exposé.

L'invention vise également un satellite, comportant un dispositif ou un instrument tels qu'exposés.

Sous encore un autre aspect, l'invention vise un procédé de commande pour dispositif de balayage tel qu'exposé,

comportant des étapes :

d'application aux premiers moyens de déflexion angulaire d'un couple correspondant au profil de balayage souhaité $\Theta s$, commandé selon une logique en boucle ouverte "feedforward",

de réinjection d'une différence $err_p$ entre le profil de balayage souhaité $\Theta s$ et l'information de sortie du codeur angulaire, dans des lois de contrôle des moyens de commander les premiers moyens de déflexion angulaire,

de combinaison du signal de sortie d'une électronique de commande appliquant ces lois de contrôle au signal d'erreur de position $err_p$, au profil de balayage souhaité $\Theta s$ pour piloter le mécanisme grand angle,

de commande en boucle ouverte du mécanisme de pointage fin en utilisant comme référence de pointage un signal d'erreur de pointage $err_p$, par comparaison de la mesure $\Theta_1 + err_{codeur}$ du codeur angulaire du miroir d'entrée audit profil de balayage souhaité $\Theta s$.

**Brève description des figures**

La description qui va suivre, donnée uniquement à titre d'exemple d'un mode de réalisation de l'invention, est faite en se référant aux figures annexées qui représentent :

Figure 1 : un schéma des éléments impliqués dans le dispositif de contrôle bi-étage,

Figures 2a et 2b : des représentations d'un balayage 1 axe et 2 axes,

Figure 3 : un schéma de principe de l'architecture de contrôle bi-étage,

Figure 4 : un schéma de principe du mécanisme de pointage fin avec asservissement interne,

Figure 5 : un profil de balayage de référence,

Figure 6 : une vue en perspective d'un mécanisme de pointage fin

Figure 7 : un diagramme de fonction de transfert du mécanisme de pointage fin,

Figure 8 : un schéma d'un dispositif de balayage mono-étage,

Figures 9a et 9b : des diagrammes de fonction de transfert en boucle fermée avec et sans mécanisme de pointage fin,

Figures 10a et 10b : des courbes de profil de balayage mécanisme grand angle lissés en variante balayage continu et balayage rampe + sinus.

**Description détaillée d'un mode de réalisation de l'invention**

Le dispositif selon l'invention trouve sa place au sein d'un système d'observation à distance d'une zone à observer située sensiblement dans une direction prédéterminée X par rapport audit système d'observation.

Le système d'observation dont il est question dans le présent exemple nullement limitatif est destiné à être embarqué sur un satellite, et donc à subir les contraintes mécaniques d'un lancement, puis à fonctionner dans un environnement spatial, caractérisé notamment par une gravité nulle. Tous les éléments du dispositif tel que décrit sont donc dimensionnés en conséquence, et la description qui suit n'entre pas dans ces détails, à la portée de l'homme du métier.

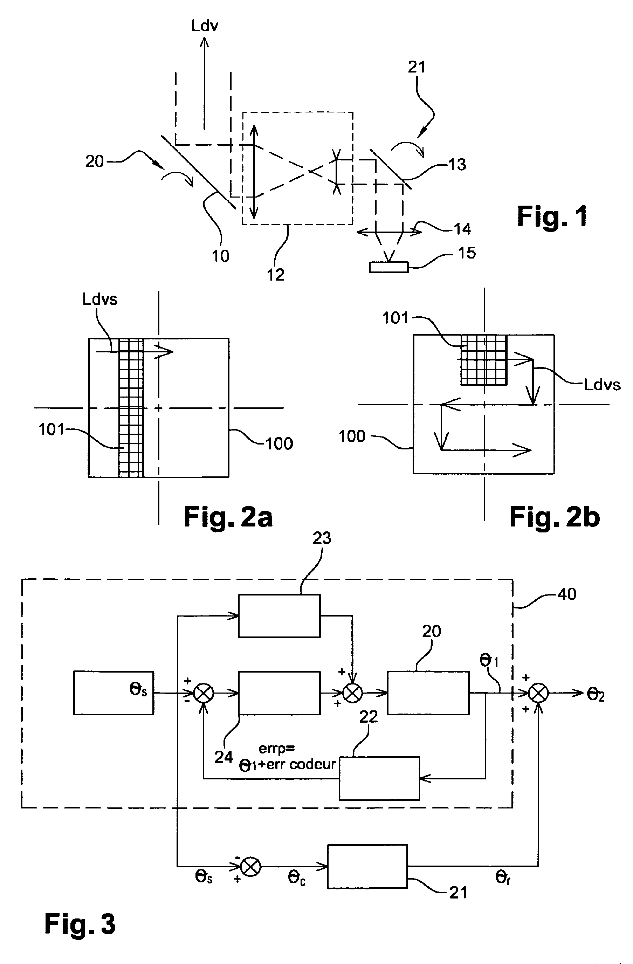

Le cas de référence choisi pour le dimensionnement est un instrument d'observation de la Terre depuis l'orbite géostationnaire qui doit observer par balayage répétitif une zone angulaire rectangulaire. On considère pour simplifier un balayage selon un seul axe (tel qu'illustré figure 2a), mais le principe est identique pour un balayage selon deux axes (tel qu'illustré figure 2b). On reconnait sur ces deux figures la zone à observer 100, le champ de vue instantané 101 de l'instrument d'observation, et le parcours de la ligne de visée souhaitée $LdV_s$ (définie comme le centre du champ instantané 101) sur la zone à observer.

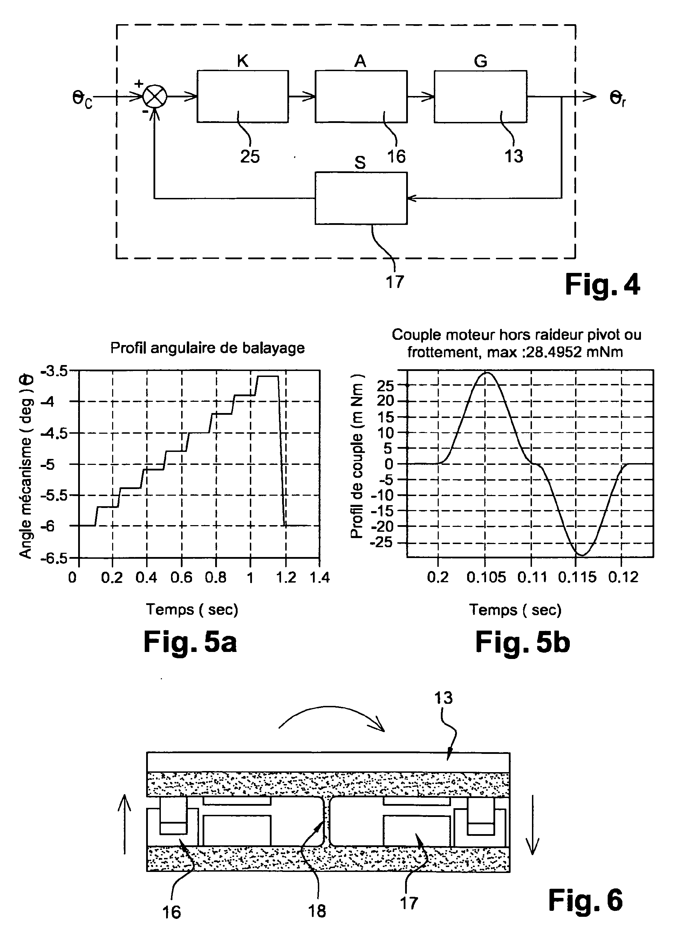

Dans le cas d'un balayage selon un axe, le profil de balayage souhaité $\Theta s(t)$ (noté par simplification dans la suite du texte $\Theta s$), correspondant à ce parcours de la ligne de visée $LdV_s$, suit une courbe en marches d'escalier lorsqu'on représente (voir figure 5a) l'angle de pointage de la ligne de visée au cours du temps. Ce choix de profil de balayage est destiné à permettre des prises de vues successives. La couverture de la zone à observer est alors obtenue par succession de pas angulaires (déplacement angulaires élémentaires dans la même direction) correspondant à la largeur du champ de vue de l'instrument moins une marge de recouvrement.

A titre purement informatif d'ordres de grandeurs envisageables, et comme on le voit figure 5a qui illustre un profil de balayage de référence, celui-ci est composé de huit pas de 0.3 degrés effectués chacun en 30 millisecondes (dont 30% de temps de **tranquillisation,** destiné à l'atténuation naturelle d'éventuelles vibrations résiduelles). Le temps pour réaliser chaque prise de vue est, dans le présent exemple non limitatif, de Ti = 100 millisecondes, et le retour vers la position angulaire initiale, après huit pas et huit prises de vue, s'effectue en 75 millisecondes.

Le point de départ du balayage est une déflexion angulaire de -6 degrés de la ligne de visée LdV de l'instrument optique par rapport à une ligne de visée moyenne, valeur choisie ici en ce qu'elle correspond au pire cas d'une première image hors du limbe, utilisée pour une calibration des détecteurs de l'instrument optique, sur fond de ciel.

La durée totale de réalisation d'un **profil** comprenant neuf prises de vue et retour (voir figure 5a) est 1.2 sec, soit une fréquence de répétition de 0.83 Hz.

Chaque manoeuvre est réalisée par un profil d'accélération angulaire composé de deux cloches cosinus opposées (voir figure 5b), c'est-à-dire un profil accélération - décélération connu sous le nom de profil "bang-bang", adouci dans le présent exemple, pour éviter la création de perturbations dynamiques à haute fréquence.

La stabilité de pointage recherchée durant les prises de vue est de l'ordre de quelques microradians, selon le cahier des charges de l'exemple utilisé ici.

Vis-à-vis de ce cahier des charges donné ici à titre d'exemple nullement limitatif, l'architecture du système de pointage dite bi-étage consiste à dissocier les fonctions entre deux étages complémentaires : un étage grand angle et un étage de pointage fin.

En référence au schéma de la figure 1, qui illustre les éléments principaux du dispositif, le balayage de la zone à observer est réalisé par un mécanisme de balayage dit mécanisme grand angle 20 (ici symbolisé par une flèche en arc de cercle) en tête de l'instrument, qui porte un miroir d'entrée 10 de la taille de la pupille 11 du télescope afocal 12 utilisé ici.

Le dispositif comporte ensuite un mécanisme de pointage fin 21 (symbolisé sur la figure 1 par une seconde flèche en arc de cercle) interne à l'instrument d'observation, réalisant une stabilisation de la ligne de visée LdV, après réduction du diamètre du faisceau optique par le télescope afocal 12. Le mécanisme de pointage fin 21 comporte donc un miroir de renvoi 13 de dimensions plus faibles que celles du miroir d'entrée 10.

L'instrument d'observation comporte en outre une seconde optique 14 qui focalise le faisceau reçu vers un dispositif de capture d'image 15.

En faisant maintenant référence à la figure 3, on constate que l'étage grand angle 40 comporte principalement un mécanisme grand angle 20, lequel génère un profil de balayage intermédiaire $\Theta_1$ qui est une approximation du profil de balayage souhaité $\Theta s$ de la ligne de visée, avec un écart $\Theta_1 - \Theta s$ nettement supérieur (de l'ordre de quelques centaines de microradians à quelques milliradians) à l'erreur maximale qui serait exigée d'un système de pointage mono-étage.

En variante, ce mécanisme grand angle 20 peut réaliser un simple balayage continu suivant une courbe représentant une moyenne mobile des "marches d'escalier" du profil. On comprend que de ce fait, les besoins du mécanisme grand angle 20 en bande passante et en rigidité (en particulier la fréquence du premier mode souple de vibrations) peuvent être relâchés par rapport au cas d'un système mono-étage.

On considère dans le présent exemple un mécanisme grand angle 20 caractérisé par un guidage en rotation par roulements à bille ou par pivots flexibles, de type connu en soi. Les pivots flexibles sont préférés car ils sont bien adaptés pour les débattements faibles recherchés (< 6 degrés). Ils ont par ailleurs l'avantage d'éviter les frottements, qui ont éventuellement un impact sur la performance de pointage et la durée de vie du mécanisme grand angle 20.

Le mécanisme grand angle 20 est ici mû par un moteur couple à courant continu sans balais et à débattement limité, de type connu en soi.

Le mécanisme grand angle 20 génère des erreurs en couple, (erreurs sur le couple appliqué au miroir d'entrée 10 pour provoquer son déplacement angulaire $\Theta$) introduites, dans le présent exemple, par la conversion entre signal numérique et commande analogique et par le bruit des électroniques (bruit de couple d'environ 0.1 mNm RMS). Il produit finalement un profil de balaya-

ge intermédiaire $\Theta_1$.

Ce mécanisme grand angle 20 comprend des moyens de mesure précise de l'erreur de réalisation du profil de balayage : $\Theta_1$ - Os.

Cette mesure d'erreur est réalisée à travers une mesure de la rotation du miroir d'entrée 10, effectuée par exemple par un **codeur angulaire** haute résolution 22 de type connu, présentant préférentiellement une très bonne précision (par exemple 22-24 bits, soit une résolution de 0.37 à 1.5 microradians) et une cadence de mesure importante (5 kHz).

Le codeur angulaire 22 génère lui-même une **erreur de mesure** $err_{codeur}$ qui est, dans le présent exemple, d'amplitude approximative de 3 à 10 microradians.

Comme on le voit sur la figure 3, la différence $err_p$ entre le profil de balayage souhaité $\Theta s$ et l'information de sortie du codeur angulaire 22 (qui s'écrit $\Theta_1$ + $err_{codeur}$) est réinjectée dans les lois de contrôle 24 du mécanisme grand angle 20. Le signal de sortie de l'électronique de commande appliquant ces lois de contrôle 24 au signal d'erreur de position $err_p$, est combiné au profil de balayage souhaité $\Theta s$ pour piloter le mécanisme grand angle 20.

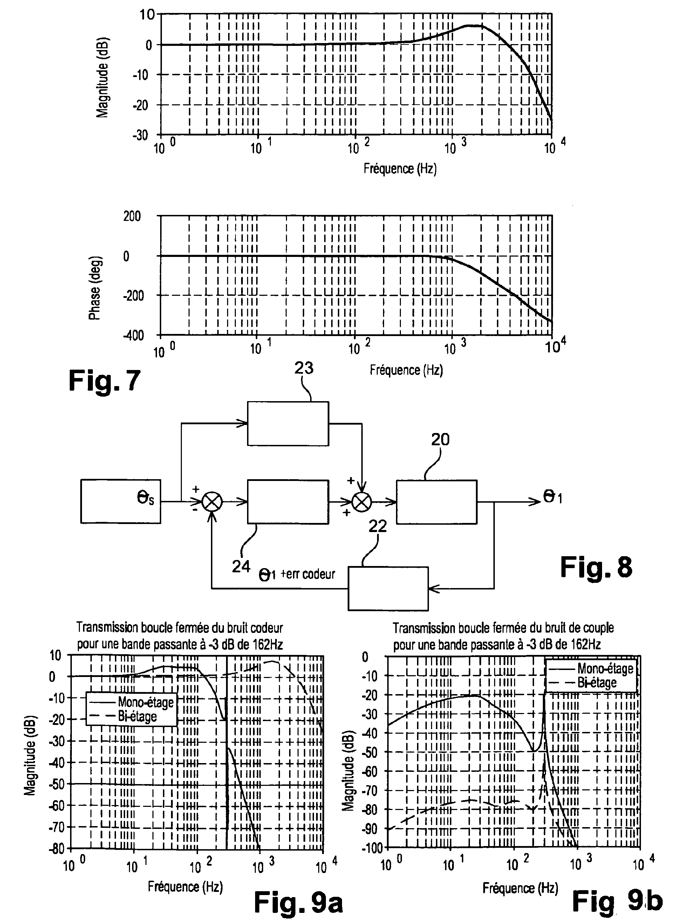

A titre de référence de dimensionnement des éléments du dispositif permettant de mettre en évidence des avantages du dispositif selon l'invention, on dimensionne ci-dessous le mécanisme grand angle 20 nécessaire pour réaliser à lui seul le profil de balayage demandé $\Theta s$ (voir figure 8).

Pour réduire l'erreur transitoire pendant la manoeuvre, on commande en boucle ouverte "feedforward" 23 le couple correspondant au profil de balayage souhaité $\Theta s$ appliqué au miroir d'entrée 10, sur la base des valeurs estimées du gain de l'électronique de commande, de l'inertie mobile et de la raideur des pivots flexibles. Ces paramètres sont caractérisés au sol, avant le lancement du satellite emportant l'instrument d'observation considéré, avec une bonne précision (< 1 %). Il est à noter que ceci reste vrai dans le cas d'un dispositif bi-étages) : le "feedforward" 23 est conservé, mais sa précision peut être moindre car les erreurs induites sont corrigées par le mécanisme fin.

Par contre le gain de l'électronique de commande est susceptible de varier en orbite, du fait notamment du vieillissement et d'effets thermiques. L'hypothèse utilisée est celle d'une précision en orbite de 90%, qui correspond à une valeur communément retenue.

La bande passante à -3 dB **en boucle fermée** doit alors être réglée à environ 300 Hz pour obtenir un **temps de convergence** compatible avec le temps alloué à la manoeuvre (30 millisecondes dans l'exemple considéré). Ceci n'est plus vrai dans le cas d'un dispositif bi-étages.

Les lois de contrôle 24 doivent effectuer un filtrage efficace des modes souples du mécanisme grand angle 20, pour conserver des bonnes marges de stabilité de la boucle fermée et pour éviter une possible excitation de ces modes souples par le profil de couple appliqué au mécanisme, qui conduirait à une stabilité de pointage dégradée durant la prise de vue. On utilise pour ce faire une structure classique comportant un **filtre passe-bas de Cauer** du 3ème ordre, de type connu en soi, dont la fréquence de coupure est calée légèrement en dessous de la fréquence attendue du premier mode souple. Celle-ci doit être supérieure à 700 Hz pour permettre une bande passante de 300 Hz avec de bonnes marges de stabilité. Dans le cas d'un dispositif bi-étages, on peut réduire la bande passante donc la fréquence minimale du mode souple.

Le système de balayage mono-étage, tel que décrit ci-dessus, présente un comportement satisfaisant avec une convergence suffisamment rapide pour assurer de bonnes performances de stabilité en prise de vue (< 1 microradian).

Cependant, les contraintes sur le mécanisme grand angle 20 se révèlent très sévères, particulièrement en termes de rigidité avec un premier mode au dessus de 700 Hz. Une telle rigidité apparaît très difficilement faisable lorsque le diamètre de la pupille (qui définit la taille du miroir d'entrée 10) est important, typiquement supérieur à 75 mm dans l'exemple choisi.

Pour pallier ce problème, l'invention met en oeuvre un second étage, qui comporte un mécanisme de pointage fin 21. Celui-ci a pour fonction de corriger l'erreur de suivi du profil de balayage souhaité $\Theta s$ par le système de balayage mono-étage décrit précédemment.

Pour ce faire, et comme on le voit sur la figure 3, ce mécanisme de pointage fin 21 reçoit en entrée, comme référence de pointage, une information d'angle commandé $\Theta_c$ correspondant à la correction de l'erreur de pointage $err_p$ de l'étage grand angle 40.

Cette correction s'écrit $\Theta s$ - $err_{codeur}$ - $\Theta_1$, (différence entre l'angle souhaité $\Theta s$ et l'angle $\Theta_1$ + $err_{codeur}$ mesuré par le codeur angulaire 22 du miroir d'entrée), et tient compte de l'erreur de mesure générée par le codeur angulaire 22. On comprend de ce fait que la résolution du codeur angulaire 22 doit préférentiellement être supérieure ou égale à la précision atteignable par le mécanisme de pointage fin 21.

Le mécanisme de pointage fin 21 est piloté selon une logique en boucle ouverte 23 sur cette erreur de pointage $err_p$, c'est-à-dire sans réinjection, dans la commande du mécanisme de pointage fin 21, de la différence entre l'angle de balayage finalement réalisé $\Theta_2$ et l'angle de balayage souhaité $\Theta s$. En effet, celle-ci n'est pas mesurable dans le système décrit.

Le mécanisme de pointage fin 21 génère en sortie une déflexion $\Theta_r$ réalisée par le miroir de renvoi 13. La somme de cet angle $\Theta r$ réalisé par le miroir de renvoi 13 et de l'angle $\Theta_1$ réalisé par le miroir d'entrée 10 constitue l'angle final de balayage $\Theta_2$ réalisé par le dispositif bi-étages.

La performance de pointage finale, dont l'erreur s'écrit $\Theta_2$ - $\Theta s$, est déterminée par la qualité de la mesure du codeur angulaire 22 et par la capacité du mécanisme de pointage fin 21 à reproduire fidèlement en gain et en phase le signal d'erreur de pointage $\Theta_c$ (qui est aussi l'erreur de balayage $err_p$ de l'étage grand angle 40), qui sert d'angle commandé pour le miroir de renvoi 13.

Le mécanisme de pointage fin 21 est donc préférentiellement du type comportant un asservissement interne (tel que schématisé figure 4), qui réalise la consigne angulaire demandée $\Theta_c$ en la comparant à une mesure interne de déflexion.

**L'erreur de gain basse fréquence** entre l'angle réalisé $\Theta_r$ et l'angle commandé $\Theta_c$ est ainsi très petite, car déterminée par le gain statique de la boucle et non plus par un gain boucle ouverte susceptible de variation dans le temps (par exemple un effet de vieillissement ou de sensibilité à la température).

En notant K, A, G et S les fonctions de transfert respectives des lois de contrôle 25, des actionneurs 16, de la dynamique du miroir de renvoi 13 et des capteurs capacitifs de déplacement 17 respectivement), la fonction de transfert entrée-sortie du mécanisme de pointage fin 21 décrit à la figure 4 s'écrit:

$$\frac{\theta_r}{\theta_c} = \frac{KAGS}{1+KAGS} \approx 1 - \frac{1}{KAGS} = \frac{1}{G_s}$$

à basse fréquence (en dessous de la bande passante du mécanisme)

Pour un gain statique Gs > 100 facilement atteignable sur un asservissement, l'erreur de gain est donc inférieure à 1 %.

Les autres sources principales d'**erreur de réalisation** de l'angle commandé $\Theta_c$ sont :

- la bande passante de l'asservissement du mécanisme de pointage fin 21, qui introduit un déphasage croissant avec la fréquence,
- la non-linéarité de réponse du mécanisme de pointage fin 21 qui introduit une erreur croissante avec l'amplitude de l'angle commandé $\Theta_c$.

Ce type de mécanisme de pointage fin 21 a généralement une gamme angulaire très limitée (de l'ordre de quelques milliradians), qui doit être compatible avec l'amplitude des erreurs de pointage du mécanisme grand angle 20.

Il est à noter qu'une saturation temporaire du mécanisme de pointage fin 21 durant la manoeuvre (c'est-à-dire un blocage en dehors des limites de fonctionnement) n'est toutefois pas critique puisqu'il n'y a pas d'exigences de pointage en dehors des phases de prise de vue.

Le mécanisme de pointage fin 21 est par exemple un mécanisme de pointage selon deux axes dont le miroir de renvoi 13 permet la stabilisation haute fréquence du faisceau optique sur une gamme angulaire réduite (+/- 5 milliradians). Des mécanismes de ce type sont connus de l'homme de l'art, et ont fait l'objet de campagne de qualification pour des environnements spatiaux (contraintes d'accélérations, de vibrations, contraintes thermiques).

Dans le présent exemple de mise en oeuvre, le mécanisme de pointage fin 21 (illustré figure 6) comporte quatre actionneurs 16 de type électromagnétiques, ici placés à 90° les uns des autres, adaptés à faire basculer le miroir de renvoi 13 monté sur des lames flexibles 18. Les déplacements selon trois degrés de liberté (angles de rotation du miroir dans son plan 'tip/tilt' et translation 'piston') de ce miroir de renvoi 13 sont mesurés par des capteurs capacitifs de déplacement 17, également de type connu.

Une électronique de proximité (non représentée sur les figures) est en charge du suivi des capteurs capacitifs de déplacement 17 et du pilotage des actionneurs 16 ainsi que de l'asservissement des trois degrés de liberté du miroir de renvoi 13. La conception et la réalisation d'une telle électronique de proximité, utilisant des lois de contrôle 25, sont connues de l'homme de l'art et ne sont donc pas détaillés plus avant ici.

Comme on l'a vu, le mécanisme de pointage fin 21 est, dans la présente invention, piloté selon une logique en boucle ouverte.

Il est donc nécessaire, pour stabiliser la ligne de visée, de modéliser fidèlement les erreurs de réalisation du couple demandé (correspondant à l'angle $\Theta_c$), qu'elles soient additives (bruit de mesure) ou multiplicatives (erreur en gain et phase, non linéarités et couplages entre axes). Le mécanisme de pointage fin 21 est ainsi modélisé par :

- Sa fonction de transfert en boucle fermée (angle commandé $\Theta_c$ vers angle réalisé $\Theta_r$, voir figure 7). Celle-ci présente un déphasage minimal dans la gamme de bande passante envisagée (< 10 degrés jusqu'à 800 Hz)
- Les non-linéarités de réponse :

  - saturation à +/-5 milliradians
  - terme quadratique résiduel après compensation de la non-linéarité des capteurs capacitifs de déplacement 17 (terme en déplacement au cube connu de ce type de capteur): $\theta_r = \theta_c + 0.046\theta^2_c$

- Le couplage entre les deux axes de rotation du miroir de renvoi 13 $K_{xy} = 1.6\%$
- Le bruit de mesure (1 microradian pic-pic, soit 0.15 microradians RMS) sensiblement négligeable.

Les figures 9a et 9b mettent en évidence les fonctions de transfert en boucle fermée avec et sans mécanisme de pointage fin 21 dans le cas particulier d'une bande passante de la boucle de commande de l'étage grand angle 40 réduite à 162 Hz, ce qui est compatible avec un premier mode souple à environ 300 Hz.

On constate que grâce à la correction de l'erreur de l'étage grand angle 40 par le mécanisme de pointage fin 21 (figure 9b), la réjection des erreurs en couple du mécanisme grand angle 20 est fortement améliorée (d'un facteur >100 en dessous de 100 Hz, et effective jusqu'à ~1 kHz. Au-delà de cette valeur, le gain non unitaire et le déphasage de la fonction de transfert du mécanisme de pointage fin 21 dégradent la correction de l'erreur de la boucle de l'étage grand angle 40.

Par contre, la transmission des erreurs $err_{codeur}$ du codeur angulaire 22 (figure 9a) est effective dans toute la bande passante du mécanisme de pointage fin 21, c'est-à-dire jusqu'à environ 5 kHz.

Rien n'empêche en apparence de réduire encore plus la bande passante de la boucle de l'étage grand angle 40, puisque c'est le mécanisme de pointage fin 21 qui garantit la performance globale.

Toutefois, plus l'erreur à compenser par le mécanisme de pointage fin 21 est grande, plus sa non-linéarité introduit d'erreur dans la réalisation de cette compensation. De plus, l'intérêt majeur d'une bande passante réduite est de relâcher la contrainte sur la fréquence du premier mode souple du mécanisme grand angle 20. Or, un mode souple trop bas en fréquence est plus excité par le profil de balayage souhaité $\Theta s$ et ne peut être complètement compensé par le mécanisme de pointage fin 21.

### Avantages de l'invention

Des simulations ont été menées sur un cas de référence, le balayage rapide par un instrument d'observation de la Terre depuis l'orbite géostationnaire (pas de 0.3 degrés effectués en 30 millisecondes). Elles montrent qu'un système de balayage mono-étage conduit à des spécifications sévères du mécanisme, jugées en limite de faisabilité en particulier en termes de bande passante, > 300 Hz, et de fréquence du premier mode souple, > 700 Hz.

Une architecture bi-étage telle qu'exposée permet d'assurer d'excellentes performances de pointage tout en relâchant sensiblement les contraintes sur le mécanisme grand angle 20 : la fréquence du premier mode souple se situe alors vers 250-300 Hz et la bande passante à - 3 dB vers 150 Hz. Elle augmente de plus la **robustesse de la performance** en la rendant moins dépendante de l'efficacité du suivi en boucle ouverte "feedforward" 23 (commande en boucle ouverte du profil de balayage souhaité $\Theta s$ pour réduire l'amplitude des transitoires). La réduction de la fréquence du premier mode souple est limitée à environ 250 Hz, car au-delà l'excitation du mode souple par le profil de couple demandé correspondant au profil de balayage souhaité $\Theta s$ devient significative.

On comprend que le dispositif apporte des avantages majeurs.

Pour un cahier des charges donné (rapidité de balayage et stabilité en prise de vue), il permet de relâcher fortement les exigences sur le mécanisme de balayage, en termes de bande passante, rigidité et capacité de couple.

Inversement, pour un mécanisme grand angle existant, il permet d'améliorer sensiblement la rapidité de balayage et la stabilité en prise de vue.

Il permet également de réduire les perturbations dynamiques induites par la réalisation du profil de balayage, le profil réalisé par le mécanisme de balayage pouvant être lissé car les variations rapides sont effectuées par le mécanisme de pointage fin 21 qui a une inertie mobile très faible.

Il permet en outre de rendre la performance finale beaucoup plus robuste aux incertitudes de caractérisation du mécanisme de balayage.

### Variantes de l'invention

La portée de la présente invention ne se limite pas aux détails des formes de réalisation ci-dessus considérées à titre d'exemple, mais s'étend au contraire aux modifications à la portée de l'homme de l'art.

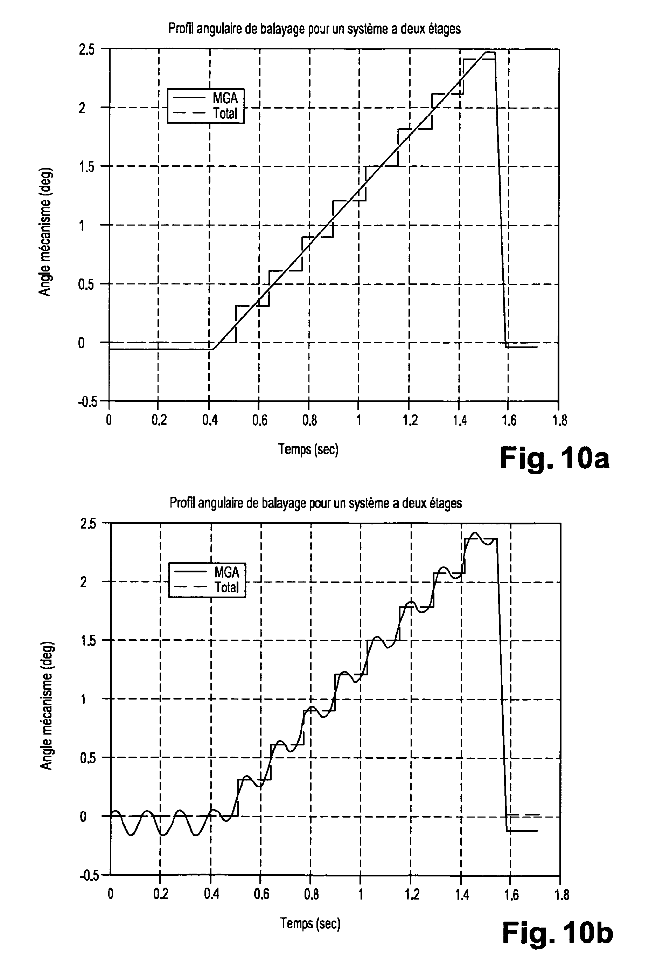

Pour relâcher encore les spécifications du mécanisme grand angle 20 et réduire les perturbations induites sur le satellite par le mouvement de ce mécanisme 20, on peut commander au mécanisme grand angle 20 un profil spécifique "lissant" les marches d'escalier du profil de balayage souhaité $\Theta s$. Deux profils lissés sont envisagés en variante (voir figures 10a et 10b):

- un balayage à vitesse constante (~40 milliradians/s) correspondant à la moyenne du profil de balayage en marches d'escalier nécessaire à la prise d'images.

- Un balayage rampe + sinus approchant au mieux le profil de balayage en marches d'escalier.

Le mécanisme de pointage fin 21 est ici encore commandé en boucle ouverte pour réaliser la différence entre le profil de balayage (en marches d'escalier) et la mesure du codeur optique du mécanisme grand angle 20. Les déflexions angulaires du mécanisme de pointage fin 21 sont beaucoup plus importantes durant les prises de vue (+/-1.9 milliradians pour le profil continu, réduit à +/-0.6 milliradians pour le profil sinus), mais restent petites devant la déflexion du mécanisme grand angle 20 (quelques dizaines de milliradians).

L'utilisation d'un profil lissé permet de relâcher encore la contrainte sur la bande passante de l'étage grand angle 40 (40 Hz typiquement) ainsi que la fréquence du premier mode souple (100 Hz typiquement), mais conduit à une erreur de stabilité plus importante en prise de vue, entre autres à cause de l'erreur liée à la non-linéarité de la réponse du mécanisme de pointage fin 21.

## Revendications

1. Dispositif de balayage pour système d'observation à distance, ledit système comportant un instrument d'observation présentant un champ de vue prédéterminé, ledit instrument d'observation comportant un chemin optique adapté à être orienté selon une ligne de visée optique (LdV) vers une zone angulaire d'un corps à observer, ladite zone à observer étant plus importante que le champ de vue de l'instrument d'observation,

   le dispositif comportant des premiers moyens de balayage (40) de la zone à observer par le champ de vue de l'instrument d'observation, lesdits premiers moyens de balayage comportant des premiers moyens de déflexion angulaire (10) de la ligne de visée optique, et des moyens de commander (20) ces premiers moyens de déflexion angulaire (10) suivant une fonction prédéterminée d'un profil de balayage souhaité $\Theta s$,

   lesdits premiers moyens de balayage (40) comportant :

   - des moyens de détection (22) de l'angle de balayage intermédiaire $\Theta_1$ réalisé par les premiers moyens de déflexion angulaire (10),
   - des moyens de comparaison pour former un signal d'erreur de pointage $err_p$ comparant l'angle de balayage intermédiaire mesuré $\Theta_1 + err_{codeur}$ fourni par les moyens de détection (22), au profil de balayage souhaité $\Theta s$,
   - des moyens de réinjection de la sortie des moyens de comparaison dans des moyens comprenant des lois de contrôle (24) des premiers moyens de balayage (40), afin d'asservir la ligne de visée optique sur le profil de balayage souhaité $\Theta s$,

   **caractérisé en ce que** le dispositif de balayage comporte en outre :

   - des seconds moyens de balayage, comprenant des moyens de pointage fin (21) permettant d'orienter des seconds moyens de déflexion angulaire (13), placés en série, sur le chemin optique de l'instrument d'observation, avec les premiers moyens de déflexion angulaire (10), ces moyens de pointage fin (21) recevant une commande en boucle ouverte de compensation de l'erreur de pointage $err_p$.

2. Dispositif selon la revendication 1, **caractérisé en ce que** le profil de balayage $\Theta s$ est de type "step and stare" (déplacement en marches d'escalier).

3. Dispositif selon l'une des revendications 1 à 2, **caractérisé en ce que** les moyens de détection (22) de l'angle de balayage intermédiaire $\Theta_1$ comportent un capteur angulaire d'une précision supérieure ou égale à la précision de pointage de la ligne de visée optique recherchée et atteignable par les seconds moyens de déflexion angulaire (21).

4. Dispositif selon l'une quelconque des revendications précédentes, **caractérisé en ce que** les premiers moyens de déflexion angulaire sont constitués d'un miroir d'entrée (10) mobile angulairement, guidé en rotation par un mécanisme grand angle (20), le mécanisme de pointage fin (21) utilisant comme référence de pointage un signal d'erreur de pointage $err_p$, par comparaison de la mesure $\Theta_1 + err_{codeur}$ du capteur angulaire (22) du miroir d'entrée (10) audit profil de balayage souhaité $\Theta s$.

5. Dispositif selon la revendication 4, **caractérisé en ce que** le mécanisme de pointage fin (21) est du type comportant un asservissement interne, qui réalise la consigne angulaire demandée $\Theta_c$ en la comparant à une mesure interne de déflexion.

6. Dispositif selon l'une quelconque des revendications 4 à 5, **caractérisé en ce que** le mécanisme de pointage fin (21) a une gamme angulaire compatible avec l'amplitude des erreurs de pointage du mécanisme grand angle (20).

7. Dispositif selon l'une quelconque des revendications précédentes, **caractérisé en ce que** le mécanisme de pointage fin (21) est un mécanisme de pointage selon deux axes comportant un miroir de renvoi (13) et permettant la stabilisation haute fréquence du faisceau optique sur une gamme angulaire de l'ordre de +/- 5 milliradians.

8. Dispositif selon l'une quelconque des revendications 2 à 7, **caractérisé en ce que** la fonction prédéterminée du profil de balayage souhaité $\Theta s$, est un profil spécifique "lissant" les marches d'escalier du profil de balayage souhaité $\Theta s$.

9. Dispositif selon la revendication 8, **caractérisé en ce que** le profil commandé à l'étage grand angle est un balayage à vitesse constante correspondant à la moyenne du profil de balayage en marches d'escalier nécessaire à la prise d'images.

10. Dispositif selon la revendication 8, **caractérisé en ce que** le profil commandé à l'étage grand angle est un balayage rampe + sinus approchant au mieux le profil de balayage en marches d'escalier.

11. Instrument d'observation, **caractérisé en ce qu'**il comporte un dispositif selon l'une quelconque des revendications précédentes.

12. Satellite, **caractérisé en ce qu'**il comporte un dispositif ou un instrument selon l'une quelconque des revendications précédentes

13. Procédé de commande pour dispositif de balayage selon l'une quelconque des revendications 1 à 10, **caractérisé en ce qu'**il comporte des étapes :

d'application aux premiers moyens de déflexion angulaire (10) d'un couple correspondant au profil de balayage souhaité $\Theta s$, commandé selon une logique en boucle ouverte "feedforward" (23),

de réinjection d'une différence $err_p$ entre le profil de balayage souhaité $\Theta s$ et l'information de sortie du codeur angulaire (22), dans des lois de contrôle (24) des moyens de commander (20) les premiers moyens de déflexion angulaire (10),

de combinaison du signal de sortie d'une électronique de commande appliquant ces lois de contrôle (24) au signal d'erreur de position $err_p$, au profil de balayage souhaité $\Theta s$ pour piloter le mécanisme grand angle (20),

de commande en boucle ouverte du mécanisme de pointage fin (21) en utilisant comme référence de pointage un signal d'erreur de pointage $err_p$, par comparaison de la mesure $\Theta_1 + err_{codeur}$ du codeur angulaire (22) du miroir d'entrée (10) audit profil de balayage souhaité $\Theta s$.

**Claims**

1. A scanning device for a remote observation system, wherein said system comprises an observation instrument having a predetermined field of view, said observation instrument comprising an optical path, adapted to be orientated according to a visual line-of-sight (VLoS) towards an angular zone of a body to be observed, said zone to be observed being more important than the field of vision of the observation instrument,

the device comprising first scanning media (40) of the zone to be observed by the observation instrument's field of view, said first scanning media comprising first angular deflection media (10) of the visual line-of-sight, and control media (20) of these first angular deflection media (10) following a predetermined function of a desired scanning profile $\Theta s$, said first scanning media (40) comprising:

- detection media (22) of the intermediary scanning angle $\Theta_1$ achieved by the first angular deflection media (10),
- comparison media to form a pointing error signal $err_p$ comparing the measured intermediary scanning angle $\Theta_1 + err_{encoder}$, supplied by the detection media (22), to the desired scanning profile $\Theta s$,
- feedback media of the output of the comparison media into media comprising control laws (24) of the first scanning media (40), with the aim of stabilizing the visual line-of-sight onto the desired scanning profile $\Theta s$,

**characterised in that** the scanning device further comprises:

- second scanning media comprising fine pointing media (21), allowing orientation of second angular deflection media (13), placed in a series, on the optical path of the observation instrument, with the first angular deflection media (10), these fine pointing media (21) receiving an open-loop command to compensate for pointing error $err_p$.

2. A device according to claim 1, **characterised in that** the scanning profile $\Theta s$ is a « step and stare » type.

3. A device according to claims 1 or 2, **characterised in that** the detection media (22) of the intermediary scanning angle $\Theta_1$, comprise an angular sensor with an accuracy superior or equal to the pointing accuracy of the visual line-of-sight sought for and reachable by the second angular deflection media (21).

4. A device according to any of the previous claims, **characterised in that** the first angular deflection media are made up of an angularly mobile input mirror (10), guided in rotation by a wide-angle mechanism (20), the fine pointing mechanism (21), using as a reference point, a pointing error signal $err_p$, by comparing the measurement $\Theta_1 + err_{encoder}$ of the angular sensor (22) of the input mirror (10), to said desired scanning profile $\Theta_s$.

5. A device according to claim 4, **characterised in that** the fine pointing mechanism (21) is of the type comprising an internal servo control, that achieves a required angular reference value $\Theta_c$, whilst comparing it to an internal measurement of deflection.

6. A device according to any of the claims 4 to 5, **characterised in that** the fine pointing mechanism (21) has an angular range compatible with pointing errors amplitude of the wide-angle mechanism (20).

7. A device according to any of the previous claims, **characterised in that** the fine pointing mechanism (21) is a pointing mechanism on two axes comprising a reflecting mirror (13) and allowing high frequency stabilization of the optical beam over an angular range of +/- 5 milliradians.

8. A device according to any of claims 2 to 7, **charac-**

**terised in that** the predetermined function of the desired scanning profile $\Theta s$, is a specific profile « smoothing» the step-offs of the desired scanning profile $\Theta s$.

9. A device according to claim 8, **characterised in that** the controlled profile at the wide-angle stage is a constant speed scanning relating to the average of the scanning profile in step-offs, necessary for picture taking.

10. A device according to claim 8, **characterised in that** the controlled profile at the wide-angle stage is an ascending + sine scanning, approaching as closely as possible the scanning profile in step-offs.

11. An observation instrument, **characterised in that** it comprises a device according to any of the previous claims.

12. A satellite, **characterised in that** it comprises a device or an instrument according to any of the previous claims.

13. A control process for a scanning device according to any of the claims 1 to 10, **characterised in that** it comprises the steps:

of application of the first angular deflection media (10) of a torque corresponding to the desired scanning profile $\Theta s$, controlled according to a « feedforward » open-loop logic (23),

of feedback of a difference of $err_p$, between the desired scanning profile $\Theta s$, and the output information of the angular encoder (22), into control laws (24) of the media of controlling (20) the first angular deflection media (10),

of combining the output signal of the control electronics applying these control laws (24) to the error signal in the err position, to the desired scanning profile $\Theta s$, to drive the wide-angle mechanism (20),

of controlling the open-loop of the fine pointing mechanism (21) whilst using, as pointing reference, a pointing error signal $err_p$, by comparing the measurement $\Theta_1 + e\pi_{encoder}$ of the angular encoder (22) of the input mirror (10) to said desired scanning profile $\Theta s$.

**Patentansprüche**

1. Abtastvorrichtung für ein Fernbeobachtungssystem, wobei das besagte System ein Beobachtungsinstrument umfasst, das ein vorbestimmtes Sichtfeld aufweist, und das besagte Beobachtungsinstrument eine optische Weglänge umfasst, die angepasst ist, um entlang einer optischen Visierlinie (LDV) in Richtung eines Winkelbereichs eines zu beobachtenden Körpers ausgerichtet zu werden, und der zu beobachtende Bereich größer ist, als das Sichtfeld des Beobachtungsinstruments,

wobei die Vorrichtung erste Mittel zum Abtasten (40) des zu beobachtenden Bereichs durch das Sichtfeld des Beobachtungsinstruments umfasst, und die besagten ersten Abtastmittel erste Vorrichtungen zur Winkelablenkung (10) der optischen Visierlinie umfasst, sowie Mittel zum Steuern (20) dieser ersten Winkelablenkungsvorrichtungen (10) gemäß einer vorbestimmten Funktion eines gewünschten Abtastprofils $\Theta_s$,

wobei die besagten ersten Mittel zum Abtasten (40) folgendes umfassen:

- Mittel zum Erfassen (22) des Zwischenabtastwinkels $\theta_1$, der von den ersten Winkelablenkungsvorrichtungen (10) realisiert wird,
- Vergleichsmittel zum Bilden eines Ausrichtfehlersignals $err_p$ zum Vergleichen des gemessenen Zwischenabtastwinkels $\theta_{1+}\ err_{Geber}$, der von den Erfassungsvorrichtungen (22) beigestellt wird, mit dem gewünschten Abtastprofil $\theta_s$,
- Mittel zur Wiedereinführung des Ausgangswerts der Vergleichsmittel in die Vorrichtungen mit den Kontrollgesetzen (24) für die ersten Abtastmittel (40), um die optische Visierlinie auf dem gewünschten Abtastprofil $\theta_s$ anzusteuern,

**dadurch gekennzeichnet, dass** die Abtastvorrichtung darüber hinaus folgendes umfasst:

- zweite Abtastmittel umfassend Feinausrichtvorrichtungen (21), anhand derer die zweiten Winkelablenkungsvorrichtungen (13) ausgerichtet werden können, die auf der optischen Weglänge des Beobachtungsinstruments mit den ersten Winkelablenkungsvorrichtungen (10) in Reihe geschaltet sind, wobei diese Feinausrichtvorrichtungen (21) einen offenen Steuerbefehl zum Kompensieren des Ausrichtfehlersignals $err_p$ erhalten.

2. Vorrichtung nach Anspruch 1, **dadurch gekennzeichnet, dass** das Abtastprofil $\theta_s$ vom Typ "Step and Stare (stufenförmige Bewegung) ist.

3. Vorrichtung nach einem der Ansprüche 1 bis 2, **dadurch gekennzeichnet, dass** die Mittel zum Erfassen (22) des Zwischenabtastwinkels $\theta_1$ einen Winkelsensor mit einer Präzision größer oder gleich der Ausrichtpräzision der optischen Visierlinie ist, die durch die zweiten Winkelablenkungsvorrichtungen (21) gewünscht werden und erreichbar sind.

4. Vorrichtung nach irgendeinem der vorherigen Ansprüche, **dadurch gekennzeichnet, dass** die ersten Winkelablenkungsvorrichtungen aus einem im Winkel verstellbaren Eintrittsspiegel (10) bestehen, der durch einen großwinkeligen Mechanismus (20) drehend geführt wird, wobei die Feinausrichtvorrichtung (21) ein Ausrichtfehlersignal $err_p$ als Ausrichtbezugspunkt verwendet, indem sie den Messwert $\theta_{1+}\, err_{Geber}$ des Winkelsensors (22) des Eintrittsspiegels (10) mit dem besagten gewünschten Abtastprofil $\theta_s$ vergleicht.

**5.** Vorrichtung nach Anspruch 4, **dadurch gekennzeichnet, dass** der Feinausrichtmechanismus (21) derart gestaltet ist, dass er ein internes Steuergerät umfasst, das den geforderten Winkelsollwert $\theta_c$ erstellt, indem es ihn mit einem internen Ablenkmesswert vergleicht.

**6.** Vorrichtung nach irgendeinem der Ansprüche 4 bis 5, **dadurch gekennzeichnet, dass** der Feinausrichtmechanismus (21) eine Winkelskala aufweist, die mit der Amplitude der Ausrichtfehler des großwinkeligen Mechanismus (20) vereinbar ist.

**7.** Vorrichtung nach irgendeinem der vorherigen Ansprüche, **dadurch gekennzeichnet, dass** der Feinausrichtmechanismus (21) ein zweiachsiger Ausrichtmechanismus mit einem Umlenkspiegel (13) ist, und er die Hochfrequenzstabilisierung der optischen Strahlung auf einer Winkelskala in der Größenordnung von +/- 5 Milliradianten ermöglicht.

**8.** Vorrichtung nach irgendeinem der Ansprüche 2 bis 7, **dadurch gekennzeichnet, dass** die vorbestimmte Funktion des gewünschten Abtastrofils es ein spezifisches Profil ist, das die Treppenstufen des gewünschten Abtastrofils es "glättet".

**9.** Vorrichtung nach Anspruch 8, **dadurch gekennzeichnet, dass** das in der Weitwinkelstufe gesteuerte Profil eine Abtastung mit konstanter Geschwindigkeit ist, die dem Mittelwert des Abtastprofils in Treppenstufenform entspricht, das für die Bildaufnahme benötigt wird.

**10.** Vorrichtung nach Anspruch 8, **dadurch gekennzeichnet, dass** das in der Weitwinkelstufe gesteuerte Profil eine Abtastung Rampe + Sinus ist, die sich dem Profil in Treppenstufenform bestmöglich annähert.

**11.** Beobachtungsinstrument, **dadurch gekennzeichnet, dass** es eine Vorrichtung nach irgendeinem der vorherigen Ansprüche umfasst.

**12.** Satellit, **dadurch gekennzeichnet, dass** er eine Vorrichtung oder ein Instrument nach irgendeinem der vorherigen Ansprüche umfasst.

**13.** Steuerungsverfahren für eine Abtastvorrichtung nach irgendeinem der Ansprüche 1 bis 10, **dadurch gekennzeichnet, dass** es die folgenden Schritte umfasst:

die Anwendung eines Moments auf die ersten Winkelablenkungsmittel (10) entsprechend dem gewünschten Abtastprofil es, das entsprechend einer offenen "Feedforward"-Steuerung (23) gesteuert wird,

die Wiedereinführung einer Differenz $err_p$ zwischen dem gewünschten Abtastprofil $\theta_s$ und dem Ausgangswert des Winkelgebers (22), in die Kontrollgesetze (24) der Steuervorrichtungen (20) der ersten Winkelablenkungsmittel (10),

die Kombination des Ausgangssignals einer Steuerungselektronik, die diese Kontrollgesetze (24) auf das Positionsfehlersignal $err_p$, anwendet, mit dem gewünschten Abtastprofil $\theta_s$ zum Steuern des großwinkeligen Mechanismus (20),

das offene Steuern der Feinausrichtvorrichtung (21) unter Verwendung eines Positionsfehlersignals $err_p$ als Ausrichtbezugswert, durch den Vergleich des Messwerts $\theta_{1+}\, err_{Geber}$ des Winkelgebers (22) des Eintrittsspiegels (10) mit dem besagten gewünschten Abtastprofil $\theta_s$.

**Fig. 1**

**Fig. 2a**

**Fig. 2b**

**Fig. 3**

**Fig. 4**

Profil angulaire de balayage

**Fig. 5a**

Couple moteur hors raideur pivot ou
frottement, max :28.4952 mNm

**Fig. 5b**

**Fig. 6**

**Fig. 7**

**Fig. 8**

Transmission boucle fermée du bruit codeur pour une bande passante à -3 dB de 162Hz

**Fig. 9a**

Transmission boucle fermée du bruit de couple pour une bande passante à -3 dB de 162Hz

**Fig. 9b**

Profil angulaire de balayage pour un système a deux étages

**Fig. 10a**

Profil angulaire de balayage pour un système a deux étages

**Fig. 10b**

**EP 2 397 882 B1**

## RÉFÉRENCES CITÉES DANS LA DESCRIPTION

**Documents brevets cités dans la description**

- US 5307198 A